# EUROPEAN PATENT SPECIFICATION

(11) **EP 1 512 252 B1**
(45) Date of publication and mention of the grant of the patent: **29.11.2006**
(21) Application number: 03760066.5
(22) Date of filing: 15.05.2003
(51) Int. Cl.: H04L 12/56

(54) **NETWORK SECURITY**
NETZWERKSICHERHEIT
SECURITE DE RESEAU

(30) Priority: 13.06.2002 GB 0213609; 03.09.2002 GB 0220463
(43) Date of publication of application: 09.03.2005
(73) Proprietor: Vodafone Group PLC, Newbury Berkshire RG14 2FN (GB)
(72) Inventor: GURLEYEN, Bulent Ozgur, Reading, Berkshire RG1 4PP (GB); CHANRASIRI, Pubudu Priyanjaya, Bracknell, Berkshire RG12 7GJ (GB)
(74) Representative: Foster, Mark Charles
(86) International application number: PCT/GB2003/002074
(87) International publication number: WO 2003/107602

(56) References cited:
- WO-A-00/72506
- WO-A-98/54870

## Description

### Technical Field

The present invention relates to a network including a plurality of devices, each device being capable of wireless communication with the other devices of the network, and to a method allowing selected devices within a network to be associated within a domain.

### Background Art

GB-A-2369964, GB-A-2366131 and WO-A-00/69186 relate to Bluetooth networks. Bluetooth supports both point-to-point (master to a slave) and point-to-multipoint (master to a number of slaves) connections. Two slaves can only communicate with each other through a master or by changing one of the slaves to a master with a slave to master switch. WO 0072506 provides a method and system for efficiently establishing secure communications between mobile devices in a radio network.

### Disclosure of Invention

According to the present invention, there is provided a network including a plurality of devices, each device being capable of wireless communication with the other devices of the network, and wherein one of the devices includes administration means for allowing selected devices to be associated within a domain by providing each device with identification data, the identification data of each device being interpretable by each other device within the domain, particular modes of direct communication only being allowed between devices within the domain having such identification data.

According to another aspect of the present invention, there is provided a method allowing selected devices within a network to be associated within a domain, each device being capable of wireless communication with the other devices of the domain, the method including adapting one device within the domain to provide each other device with identification data, the identification data of each device being interpretable by each other device within the domain, particular modes of direct communication only being allowed between devices within the domain having such identification data.

### Brief Description of the Drawings

For a better understanding of the present invention, embodiments will now be described by way of example, with reference to the accompanying drawings, in which:
Figure 1 shows a personal area network (PAN) including a plurality of devices belonging to one user;
Figure 2 shows a personal area network (PAN) having two PAN Security Domains (PSDs) formed therein in accordance with the invention;
Figure 3 shows the formation of a further PSD in the PAN of Figure 2;
Figure 4 shows the exchange of data between devices within a PSD;
Figure 5 shows a PSD, including the structure necessary for resource sharing within the PSD;
Figure 6 shows in more detail the structure for resource sharing within a device of a PSD; and
Figure 7 shows the interaction between two devices within a PSD between which resource sharing is to occur.

### Mode of Carrying out the Invention

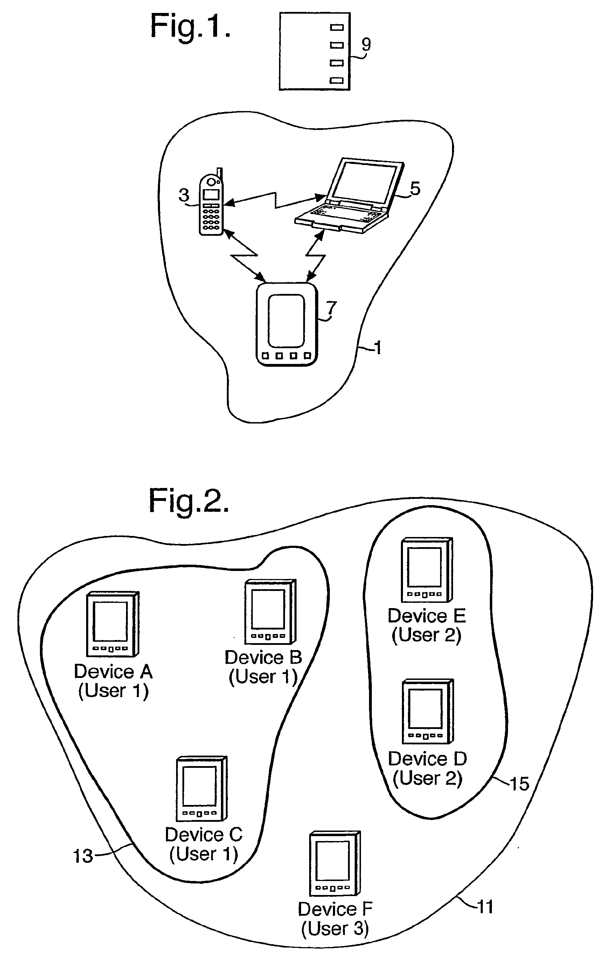

Figure 1 shows a personal area network (PAN) 1 including a plurality of devices belonging to one user. Within the PAN 1 it is desired that all the individual devices can communicate and share resources with other devices of the same user in seamless fashion. From a security standpoint, this requires individual devices to identify other devices owned by the same user when offering or requesting services. Further, in order to protect data confidentiality, individual devices should be able to communicate securely with each other. Depending on the number of devices within the PAN 1 and the services they offer, this can become very complicated. This problem is further complicated because the number of devices will be changing with time as devices join and leave the PAN 1.

A PAN is different from a conventional network in that communication between devices is not through a server.

If such a multitude of devices in a PAN are expected to have coherent behaviour, all devices should be able to fit into a distributed terminal architecture capable of taking into consideration the ownership and privileges required for individual devices to operate.

In Figure 1 the devices in the personal area network 1 comprise a GPRS mobile telephone 3, laptop computer 5 and personal digital assistant (PDA) device 7. As indicated by the arrows, each of the devices 3, 5, 7 is capable of communicating with the other devices within the PAN 1. In this example each of the devices 3, 5, 7 is a Bluetooth device, allowing the devices 3, 5, 7 to be inter-operable. Data communication between the devices 3, 5, and 7 may be by infrared communication, radio communication or by any other wireless means.

For example, the PDA 7 will connect to the mobile telephone 3 to access the Internet and to the laptop computer 5 to synchronise the user's calendar or to exchange files for other reasons.

Conventionally, each pair of devices 3, 5 and 7 must be separately configured to communicate with each other. This will require three separate configuration processes, for example between the laptop 5 and the PDA 7, the laptop 5 and the mobile telephone 3 and the mobile telephone 3 and the PDA 7. After an initial configuration processes the devices 3, 5, 7 may communicate with one another, although typically this will require the user to manually select a communication mode on each of two devices to communicate with one another. The devices may be configured to require the user to enter a personal identification number (PIN) before data exchange between a pair of devices can begin in order to, for example, prevent an unwanted device being substituted for one of the devices 3, 5 and 7 and obtaining or over-writing data from a device within the PAN 1.

In such a PAN 1, if it is desired to add a further device, such as MP3 player 9, it will be necessary to configure separately each of the devices 3, 5, 7 within the PAN 1 to communicate with the MP3 player 9. It will be appreciated that, as the number of devices within the PAN 1 increases, the addition of a new device to the PAN 1 requires an increasing number of configuration steps. For a conventional PAN having *n* components, *n**(*n*-1)/2 component associations must be performed to form the PAN.

According to an aspect of the invention a group of devices within a PAN form a PAN Security Domain (PSD). A PSD is a group of components inside a PAN where each component can be authenticated, trusted and securely communicated with by means of some common security association. This reduces the number of component association procedures required.

In a PSD one device has the role of a PSD administrator. This device includes security data (for example a shared key or a public-private key pair) that can be selectively passed to other devices that are to join the PSD. Communication can only successfully occur between devices that have this security data. Once a device has the security data, it can communicate with other devices in the PSD without referring to the PSD administrator. When a device is added to the PSD the PSD administrator advises each device of the addition of a new device to the PSD. If there are *n* devices in the PSD this requires *n*-1 inter-device communications. It is not necessary for the new device to separately pair or associate itself with each other device in the PSD.

The security association could be in the form of a shared secret key or a shared group key based on public key techniques, with a mutual "trust" being established between the devices by a personal certification authority (CA) within the PSD. Certificates issued to all PSD members indicate the device as a member of that PSD. The group key is not used for secure bilateral communications in the PSD, which takes place using bilaterally established keys - KAB allowing secure bilateral communication between devices A and B, KBC allowing secure bilateral communication between devices B and C, and KAC allowing secure bilateral communication between devices A and C - (discussed further below). The group key is used only for proof of PSD membership, secure PSD-wide broadcasts and PSD-wide secure communications.

The initial decision as to whether a device can be part of a PSD or not will be on user judgement followed up by positive authentication of the device based on a public key infrastructure (PKI) trusted root certificate. Alternatively, another known authentication method could be used.

One device within the PSD is nominated as the PSD administrator. The PSD administrator is a role that could be assumed by any of the devices in the PSD provided it contains the necessary hardware to support the role, for example a secure key store and/or a display. The administrator role may be moved from one device to another. If the administrator role is moved to a new device, the new device will have passed thereto, or have pre-stored thereon, the necessary security data to allow the admission of new devices to the PSD.

The PSD administrator also is responsible for configuring and managing the policies (described below) governing the devices in the PSD. Additionally it is responsible for enrolling new members in the PSD. The PSD administrator could also contain the personal CA that is responsible for issuing certificates to the PSD members. Advantageously, the PSD administrator will be the device with the greatest processing power and the best user interface. In a PSD based on the PAN 1 of Figure 1, the administrator is laptop 5.

When a single user owns all devices in a PSD and treats them equally, such a configuration of devices will not contain any restrictions based on the identity of a device. All shared resources will be made available to all the PSD member devices. In other words, there is group "trust" between the devices. If a device is a member of the PSD, the other devices will assume that the devices can be trusted and communicated with. There is no need for each device to set up an individual trust relationship with each other device, in contrast to a conventional PAN as described above. Provided that the device is admitted to the group by the PSD administrator, the other devices will assume that the newly-admitted device can be trusted.

Figure 2 illustrates a PAN 11 containing six devices, designated A to F. The devices shown in Figure 2 are all PDAs but it should be understood that they could be other types of device, or a combination of different devices, as in Figure 1. Devices A, B and C are owned by the same user (user 1) while D and E are owned by another user (user 2). A third user (user 3) owns device F. All these devices are capable of communicating with other using their local interfaces.

A first PSD 13 includes devices A, B and C. These devices will be able to share resources and communicate with each other securely. A second PSD 15 includes devices D and E. Again, these devices will be able to share resources and communicate with each other securely.

If membership of one PSD is limited to devices, such as devices A, B and C, from a single user, two users will not be able share any resources. Sharing of resources could be achieved if the existing PSDs are configured so that device sharing between the PSDs is possible.

A more effective and preferred way for the two users to share resources is to establish a new PSD. Depending on the situation, this PSD could be a temporary or a permanent PSD including the devices with the resources required to be shared.

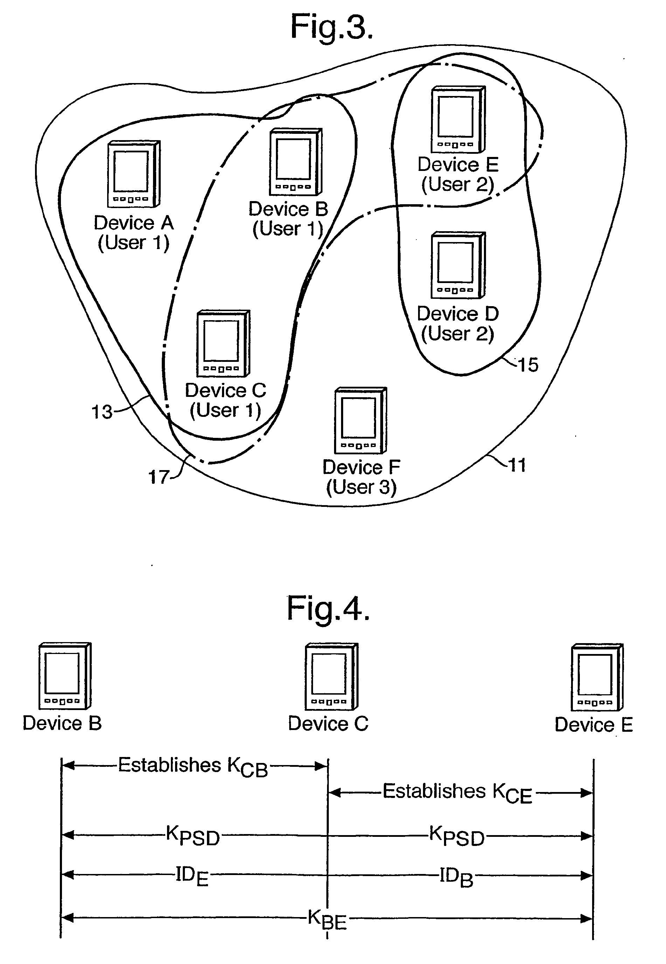

Figure 3 shows a new PSD 17 formed between devices B, C and E. This will require a security association between two devices belonging to users 1 and 2. This association does not have to be between the very same devices that are going to be part of the new PSD. The original PSD could transmit the necessary data to introduce the new device to the PSD to all its member devices. Alternatively, the users 1 and 2 could pair two devices (one from each user) and then add further devices as required using one of the original devices as the PSD administrator.

When forming a PSD with devices from different users, it is not always straightforward to assign a PSD administrator. It might have to be mutually agreed by all parties in the PSD. Alternatively, the device that initially created the PSD could assume this role. Nevertheless, if required it could be handed over to another device in the PSD.

Each user can then configure their device policies to share the required resources with the members of the newly formed PSD.

User 1 will configure the policy on B and C while user 2 will do the same for E. Individual devices could contain a number of built in or preset configurations that could be activated by the user for different PSDs.

If required a PSD could also be used to establish different groups within a set of devices owned by the same user.

In addition to the temporary PSD between user 1 and user 2, either of them could establish another PSD to share resources with user 3. In order to keep the PSD concept simple, user 2 cannot use one of his devices, say E to establish a PSD between user 1 and 3, i.e. E cannot bridge the trust between the two different PSDs. Nonetheless, this could be achieved if E used as a PSD administrator to form a PSD involving devices from user 1 and user 3.

The formation of a PSD between devices B, C and E, with identities IDB, IDC and IDE respectively, will now be described in more detail, with reference to Figure 4. In order for these devices to form a PSD, two security associations between the three devices are needed. For example, these could be {B, C} and {C, E}. Based on these associations, it is possible for B and C, and C and E to communicate securely. Device C performs the role of PSD administrator. C then generates a group PSD membership key KPSD. C then communicates the identities of all PSD members to each other, i.e. forwards IDB and IDE to E and B respectively. Together with KPSD, B and E are now in a position to generate a further key KBE to allow secure communications between them. Figure 4 of the drawings shows the exchange of data between devices.

Alternatively, device C can have the role of a personal CA and issue B and E with certificates to carry out the above key exchanges using a local PKI. The possession of this certificate is equivalent to having access to KPSD, i.e. its proof of membership in the PSD.

However, forming a PSD itself does not impose any behaviour patterns or rules on the individual devices themselves. These must be achieved through a suitable "policy". This policy will set guidelines on behaviour and dictate how resources should be used and how the device should behave under different circumstances.

PSD policy can be used to enforce restrictions on any of the following:
a. Available resources.
b. Requirements for joining the PSD as a member.
c. Requirements to assume the role of the PSD administrator.
d. User interaction.
e. Usage of chargeable services.
f. The ability to install new applications.

Devices from more than one user may be PSD members.

The PSD policy file is in a standardised format to achieve interoperability between devices and it contains information about the resources available to different devices depending on the PSD to which they belong. All the resources listed in the file do not have to be available to the PSD all the time. These entries can be for future use when the resource is available to the PSD.

Each device has its own version of the policy file that states which resources are available from that particular device to the rest of the PSD members. Hence the policy file for two devices with different resource commitments to the PSD will differ. Devices may update or modify this as and when resources are either added to the PSD or removed from the PSD. Alternatively, the device might rely on the PSD administrator to do this on the devices behalf.

Depending on the access control mechanism it might be required to the store the policy file locally on a device. Nevertheless it is possible for a device to enquire and obtain policy information from a trusted device. It is not required for this trusted device to be a member of the same PSD.

The significance of each entry in a device policy is explained below.

| **Resource Type & ID** | **Target ID** | **Authorisation ID** |
|---|---|---|
| GPRS | C | |
| .... | ... | ... |

An Example PSD Policy File

### Resource Type & ID

This contains information about the ID of the resource and its type. The ID is required to uniquely identify the resource within a component. The type of the resource is important when enforcing "Permissions Types" (discussed below) applicable to a resource.

Different resources on a component can be divided into four broad functional areas depending on their impact on the hosting component and its user.
1. Local Services - Printers, projectors, etc.
2. Network Interfaces - GSM, GPRS, BT, IrDA, WLAN, etc., or similar resources related network connectivity
3. Personal Information Management - Calendar, Phonebook, Location information etc., which are of personal value and will have privacy issues associated with them.
4. Executables - refers to code downloaded from another component on to the target device.

The above is merely an example of resources.

### Target ID

Uniquely identifies the component where the resource is located. It is useful to identify resources within the PSD when the resource is available from more than one component in the PSD.

### Authorisation ID

PSD members have access to all PSD resources that have been made available by the policy file. If the PSD relies on a PSD administrator, then the Authorisation ID should be the ID of the component assuming the role of the PSD administrator. If the component is to have the autonomy to authorise other components access to its resources, then the Authorisation ID is the same as the Target ID. When there are devices from more than one user, it is likely that the devices will retain the ability to authorise themselves without having to rely on a PSD administrator.

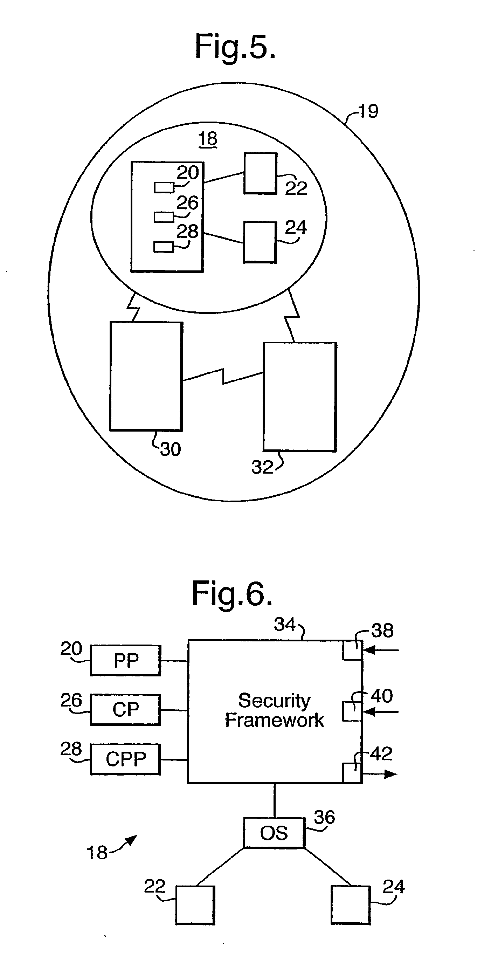

Figure 5 shows a device 18 within a PSD 19. The device includes PSD policy instructions (PP) 20, storing the PSD policy data described above.

The device 18 has associated therewith resources 22 and 24, which may be useful to other devices 30 and 32 within the PSD 19. For example, if the device is a laptop computer, such resources may be the LCD display and a printer, and, if the device is a mobile telephone, the resources may be SMS transmission/reception and the personal telephone book stored on the mobile telephone. It should, of course, be understood that these are merely examples of devices and resources.

The device 18 also includes component policy instructions (CP) 26. These instructions control the allocation of resources 20, 24 to local requests, i.e. requests from the device 18 itself. These instructions control use of local resources in a generally conventional manner, and have a very similar function to the security policy used in the MIDP 2.0 standard.

The device 18 further includes component PSD profile instructions (CPP) 28. These instructions control the use of resources 22 and 24 by the other devices 30 and 32 in the PSD 19. If the device 18 is a member of more than one PSD, it will have more than one set of PSD policy instructions and more than one set of component PSD profile instructions. However, for the sake of simplicity, in the present example, the device 18 is a member of only one PSD, PSD 19.

It will generally be desired that (although the invention is not so restricted) any restrictions in the component policy instructions 26 to use of resources 20, 24 in response to local requests will also be applied to requests of other members 30, 32 of the PSD 19. Therefore, the component PSD policy instructions 28 will include the restrictions of the component policy instructions 26.

In addition, typically the component PSD profile 28 will impose further restrictions on use of the resources 20, 24 by the other devices 30, 32 of the PSD 19. For example, if the device 18 is a GPRS mobile terminal, the component PSD profile may allow the mobile terminal to be used as a modem for downloading data to the devices 30, 32, but may restrict the maximum quantity of downloaded data to 500 KB in any given period - for example 24 hours. If further requests for data downloading are received from the devices 30, 32, the component PSD profile 28 may be configured such that the user of the device 18 receives a (visual and/or audio) prompt from the mobile terminal indicating that a further request for data download has been made, seeking authorisation from the user of the device 18 for this further data download. For example, the component PSD profile 28 may also allow access to the personal telephone book stored on the mobile terminal, but may not permit access to the SMS messages stored on the mobile terminal.

It should be understood that these are merely examples of resource sharing. The component PSD profile 28 can be configured to prohibit or allow sharing of any resources provided by the device 18. The component PSD profile 28 will also set any limitations on use of resources - such as limiting the amount of use or requiring a user prompt for authorisation of resource use. Of course, components 30 and 32 will include their own resources that may be shared by device 18 within the PSD 19, and will include PSD policy instructions, component policy instructions and component PSD profile instructions. However, these are not shown in Figure 5, for the sake of simplicity.

The arrangement of the device 18 is shown in more detail in Figure 6. A security framework 34 controls access, via operating system 36, to resources 22 and 24. The security framework includes first input port 38 which receives local requests (i.e. requests by the device 18) for use of resources 22 and 24. On receipt of such a request, the security framework 34 interrogates the component policy instructions 26 to determine the allowability of the resource request. If the resource request is allowed, or conditionally allowed, the resource request, with the appropriate conditions, is passed to operating a system 36, which allows the appropriate usage of the resources 22, 24.

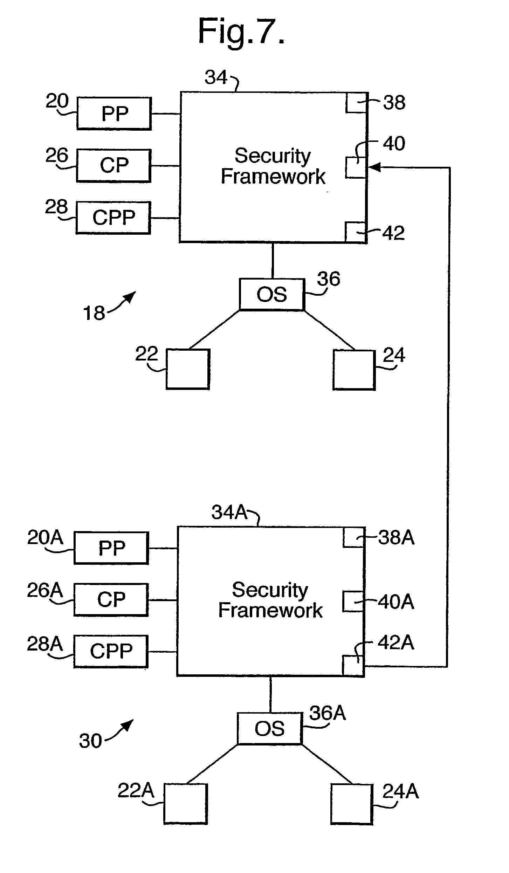

The security framework 34 also includes input port 40 for receiving resource requests from other devices 30, 32 within the PSD 19. The procedure on receipt of their request for use of a resource 26, 25, from another device will be described further below in relation to Figure 7.

The security framework 34 further includes an output port 42 for passing requests for use of external resources to other devices 30,32 within the PSD 19. The operation of the PSD 19 with respect to such a request will be understood from the following discussion in relation to Figure 7.

Figure 7 shows the operation of the PSD 19 when device 30 wishes to make use of resource 22 of device 18. As is shown in Figure 7, device 30 includes a structure similar to claim 18 for dealing with resource sharing within the PSD 19. In Figure 7 elements of device 30 which correspond to similar elements of device 18 are designated the with same reference number suffixed with "A".

In the Figure 7 example, device 18 is a laptop computer and resource 22 is a printer. Device 30 is a mobile telephone and resource 24A is a store of SMS messages. The user of device 30 wishes to print an SMS message from store 24A.

The operating system 36A of device 30 passes the relevant SMS to security framework 34A together with a message that it is desired to print the SMS message. The security framework 34A consults the PSD policy instructions 20A, which includes a list of resources available within the PSD 19. In the examples shown, the PSD policy instructions 20A will indicate that device 18 includes printer resource 22. The SMS message, together with instructions to print this message are passed to device 18 via output port 42A of device 30 and input port 40 of device 18. This data will be encoded in the manner described above, using the key as described.

The security framework 34 of device 18 decodes the received data at port 40. The security framework 34 then consults component PSD profile instructions 26 to determine whether the resource request should be allowed. If the resource request is allowed, the request is passed to the resource (printer) 22 via operating system 36.

Each device within a PSD may be equally trusted, i.e. all devices within a PSD will have access to the same information and resources. Alternatively, devices within a PSD may have different "privileges", that is one device may be able to access information and resources that another device within the PSD is prevented from accessing. For example, a PSD may include two personal computers, PC A and PC B. These personal computers could be configured so that only PC A has access to the PSD user's e-mails (which could be stored on PC A or elsewhere). Such restrictions (or privileges) to the access of information within the PSD could be held on the policy file for that PSD). It is preferred that the restrictions or privileges can be changed within a PSD, as required. This will typically be performed under control of the PSD administrator.

The advantages of a PSD include:
* It is not necessary for a new PSD member to share security associations with all existing PSD members to establish trusted communications with them. For example, if device D joins an existing PSD of A, B and C, which is defined by group key, KABC. Once D has been authenticated by A (the PSD administrator), and a bilateral communication key KAD established, A can send KABC to D under the protection of key KAD. D can then prove PSD membership with this and establish further bilateral secure communication keys with B and C.
* Reduction in the user interaction required as the number of imprinting events is reduced. For a PSD of *n* components, only *n*-1 imprinting sessions are necessary, compared to *n*(*n*-1)/2 in a conventional PAN without the PSD concept
* Use of the device with the best user interface for the PSD administrator for enrolling new members allows the most user friendly imprinting protocols to always be used
* Use of a PSD administrator with revocation checking facilities allows revocation checks to be performed when new devices with certificates are enrolled
* Consistent resource information across all devices
* Resources can be shared with other users without having to compromise interactions between one's own devices
* Designation of group roles:
   o Designation of a single device to perform the role of a gateway between all PSD devices and external devices.
   o Designation of devices to perform specialised tasks, for example calendar synchronisation, revocation checking
* Use of the shared security associations to perform secure broadcast
* A device can be nominated by the user to perform administrative tasks on his behalf, i.e. the PSD administrator
* Establishes another layer of security on top of link layer security
* Different PSDs can be created for different trust groups within a PAN to solve particular access control problems.

The PSD concept described above is applicable to networks other than PANS. The devices in the network (and domain) may be separated by large distances.

Devices could be manufactured or pre-configured to enrol in certain PSDs automatically. For example, a mobile telephone could be configured so that when it comes within communication range of a particular PSD it automatically enrols in that PSD. Where such automatic enrolment is provided, generally the exchange of data between devices in the PSD will be restricted to prevent private information being disclosed to other devices in the PSD.

For example, a PSD could be arranged by a train operating company that automatically enrolled appropriately programmed mobile telephones at a station so that train running information can be transmitted to the telephone for use by the user.

## Claims

1. A network (11) including a plurality of devices (A...F;18,30,32), each device being capable of wireless communication with the other devices of the network, at least some of said devices having one or more resources for sharing with the other devices of the network, the network including administration means for allowing selected devices (A,B,C;DE;BCE;18,30,32) to be associated within a domain (13;15;17;19) including at least three of said devices by providing each device (A,B,C;DE;BCE;18,30,32) with identification data, the identification data of each device (A,B,C;DE;BCE;18,30,32) being interpretable by each other device (A,B,C;DE;BCE;18,30,32) within the domain (13;15;17;19), particular modes of communication only being allowed between devices (A,B,C;DE;BCE;18,30,32) within the domain (13;15;17;19) having such identification data, the administration means including means for selectively enabling sharing of said resources between the devices within the domain (19) and which is operable to maintain a store indicating the resources available for sharing between respective devices within the domain (18) and to provide these devices with data to enable selective sharing of resources.

2. The network of claim 1, wherein the identification data received from the administration means includes a key (KPSD).

3. The network of claim 2, wherein the key (KPSD) is a shared key.

4. The network of claim 2, wherein the key (KPSD) is a public key of a public-private key pair, the private key being stored on the administration means.

5. The network of any one of claims 1 to 4, wherein each device (A,B,C;DE;BCE;18,30,32) has a security certificate associated therewith indicating its membership of the domain (13;15;17;19).

6. The network of any one of claims 2 to 5, including further keys (KAB,KBC,KCA,KBE,KCE) for allowing encrypted communication between the devices (A,B,C;DE;BCE;18,30,32) within the domain (13;15;17;19).

7. The network of any one of claims 1 to 6, wherein the administration means transmits to each device (A,B,C;DE;BCE;18,30,32) within the domain (13;15;17;19) data indicative of the characteristics of the other devices (A,B,C;DE;BCE;18,30,32) within the domain (13;15;17;19).

8. The network of any one of claims 1 to 7, wherein the administration means is transferable form one device to another.

9. The network of any one of claims 1 to 7, wherein a plurality of devices within the domain (13;15;17;19) include administration means, and means is provided to selectively enable only one of said administration means at a time.

10. The network of any one of claims 1 to 9, including a plurality of said domains (13;15;17;19).

11. The network of claim 10, wherein a device (B,C,E) is associated with each of said plurality of domains (13;15;17;19).

12. The network of any one of the preceding claims, wherein at least one of the devices (18) within the domain (19) includes control means (28,34,40) for controlling use of its resources by other devices (30,32) within the domain (19).

13. The network of claim 12, wherein the control means (28,34,40) limits access by said other devices (30,32) to only selected ones of said resources.

14. The network of claim 12 or 13, wherein the control means (28,34,40) limits the amount of use by said other devices (30,32) to said resources.

15. The network of claim 12, 13 or 14, wherein the control means (28,34,40) prompts the operator of the device (18) making resources available to authorise use of said resources by said other devices (30,32) when a request for use of said resources is received therefrom.

16. A method allowing selected devices (A...F;18,30,32) within a network (11) to be associated within a domain (13;15;17;19) that includes at least three of said devices, each device (A...F;18,30,32) being capable of wireless communication with the other devices (A...F;18,30,32) of the domain and at least some of said devices having one or more resources for sharing with the other devices of the domain, the method including adapting one device (C,18) within the domain (13;15;17;19) to provide each other device (A,B,C;DE;BCE;18,30,32) with identification data, the identification data of each device (A,B,C;DE;BCE; 18,30,32) being interpretable by each other device (A,B,C;DE;BCE;18,30,32) within the domain (13;15;17;19), particular modes of communication only being allowed between devices (A,B,C;DE;BCE;18,30,32) within the domain (13;15;17;19) having such identification data, the adapted device (C;18) selectively enabling sharing of said resources between the devices within the domain (19) by maintaining a store indicating the resources available for sharing between respective devices within the domain (19) and providing these devices with data to enable selective sharing of resources.

17. The method of claim 16, wherein the identification data includes a key (KPSD).

18. The method of claim 17, wherein the key (KPSD) is a shared key.

19. The method of claim 17, wherein the key (KPSD) is a public key of a public-private key pair, the private key being stored on the adapted device.

20. The method of any one of claims 16 to 19, wherein each device (A,B,C;DE;BCE;18,30,32) has a security certificate associated therewith indicating its membership of the domain (13;15;17;19).

21. The method of any one of claims 17 to 20, including providing further keys (KAB,KBC,KCA,KBE,KCE) for allowing encrypted communication between the devices (A,B,C;DE;BCE;18,30,32) within the domain (13;15;17;19).

22. The method of any one of claims 16 to 21, wherein the adapted device (A,B,C;DE;BCE;18,30,32) transmits to each device (A,B,C;DE;BCE;18,30,32) within the domain (13; 15; 17; 19) data indicative of the characteristics of the other devices (A,B,C;DE;BCE;18,30,32) within the domain (13;15;17;19).

23. The method of any one of claims 16 to 22, including changing the device within the domain which provides each other device with identification data.

24. The method of any one of claims 16 to 23, including allowing the formation of a plurality of said domains (13;15;17;19).

25. The method of claim 24, wherein a device (B,C,E) is associated with each of said plurality of domains (13;15;17;19).

26. The method of any one of claim 16 to 25, wherein use of the resoures (22,24) of at least one of the devices (18) within the domain (19) by other devices (30,32) in the domain (18) is controlled.

27. The method of claim 26, wherein the control step limits access by said other devices (30,32) to only selected ones of said resources.

28. The method of claim 26 or 27, wherein the control step limits the amount of use by said other devices (30,32) of said resources.

29. The method of claim 26, 27 or 28, wherein the control step prompts the operator of the device (18) making resources available to authorise use of said resources by said other devices (30,32) when a request for use of said resources is received therefrom.

## Patentansprüche

1. Netzwerk (11), das eine Vielzahl von Vorrichtungen (A...F; 18, 30, 32) enthält, wobei jede Vorrichtung zu drahtloser Kommunikation mit den anderen Vorrichtungen des Netzwerks fähig ist, wenigstens einige der Vorrichtungen eine oder mehrere Ressourcen zur gemeinsamen Nutzung mit den anderen Vorrichtungen des Netzwerks haben, das Netzwerk eine Administrationseinrichtung enthält, die es gestattet, ausgewählte Vorrichtungen (A, B, C; DE; BCE; 18, 30, 32) in einer Domäne (13; 15; 17; 19) verbinden, die wenigstens drei der Vorrichtungen enthält, indem jede Vorrichtung (A, B, C; DE; BCE; 18, 90, 32) mit Identifikationsdaten versehen wird, wobei die Identifikationsdaten jeder Vorrichtung (A, B, C; DE; BCE; 18, 30, 32) durch jede andere Vorrichtung (A, B, C; DE; BCE; 18, 30, 32) in der Domäne (13; 15; 17; 19) interpretiert werden können, bestimmte Kommunikationsmodi nur zwischen Vorrichtungen (A, B, C; DE; BCE; 18, 30, 32) in der Domäne (13; 15; 17; 19) mit derartigen Identifikationsdaten zugelassen werden, die Administrationseinrichtung eine Einrichtung zum selektiven Freigeben gemeinsamer Nutzung der Ressourcen zwischen den Vorrichtungen in der Domäne (19) enthält, die so betrieben werden kann, dass sie einen Speicher führt, der die zur gemeinsamen Nutzung zwischen jeweiligen Vorrichtungen in der Domäne (18) verfügbaren Ressourcen anzeigt und diesen Vorrichtungen Daten zum Freigeben selektiver gemeinsamer Nutzung von Ressourcen bereitstellt.

2. Netzwerk nach Anspruch 1, wobei die von der Administrationseinrichtung empfangenen identifikationsdaten einen Schlüssel (KPSD) enthalten.

3. Netzwerke nach Anspruch 2, wobei der Schlüssel (KPSD) ein gemeinsam genutzter Schlüssel ist.

4. Netzwerk nach Anspruch 2, wobei der Schlüssel (KPSD) ein öffentlicher Schlüssel eines Paars aus öffentlichem und privatem Schlüssel ist und der private Schlüssel in der Administrationseinrichtung gespeichert ist.

5. Netzwerk nach einem der Ansprüche 1 -4, wobei jede Vorrichtung (A, B, C; DE: BCE; 18, 30, 32) ein mit ihr verbundenes Sicherheitszertifikat hat, dass ihre Mitgliedschaft in der Domäne (13; 15; 17; 19) anzeigt.

6. Netzwerk nach einem der Ansprüche 2 - 5, das weitere Schlüssel (KAB, KBC, KCA, KBE, KCE) zum Gestatten verschlüsselter Kommunikation zwischen den Vorrichtungen (A, B, C; DE; BCE; 18, 30, 32) in der Domäne (13; 15; 17; 19) enthält.

7. Netzwerk nach einem der Ansprüche 1-6, wobei die Administrationseinrichtung zu jeder Vorrichtung (A, B, C; DE; BCE; 18, 30, 32), in der Domäne (13; 15; 17; 19) Daten sendet, die die Eigenschaften der anderen Vorrichtungen (A, B, C; DE; BCE; 18, 30, 32) in der Domäne (13; 15; 17; 19) anzeigen.

8. Netzwerk nach einem der Ansprüche 1-7, wobei die Administrationseiririchtung von einer Vorrichtung zur anderen übertragen werden kann.

9. Netzwerk nach einem der Ansprüche 1-7, wobei eine Vielzahl von Vorrichtungen in der Domäne (13; 15; 17; 19) Administrationseinrichtungen enthalten und Einrichtungen zum selektiven Freigeben jeweils nur einer der Administrationseinrichtungen vorhanden sind.

10. Netzwerk nach einem der Ansprüche 1 - 9, das eine Vielzahl der Domänen (13; 15; 17, 19) enthält.

11. Netzwerk nach Anspruch 10, wobei eine Vorrichtung (B, C, E) mitjeder der Vielzahl von Domänen (13; 15; 17; 19) verbunden ist.

12. Netzwerk nach einem der vorangehenden Ansprüche, wobei wenigstens eine der Vorrichtungen (18) in der Domäne (19) eine Steuereinrichtung (28. 34, 40) zum Steuern der Nutzung ihrer Ressourcen durch andere Vorrichtungen (30, 32) in der Domäne (19) enthält.

13. Netzwerk nach Anspruch 12, wobei die Steuereinrichtung (28, 34, 40) Zugriff durch die anderen Vorrichtungen (30, 32) auf lediglich ausgewählte der Ressourcen beschränkt.

14. Netzwerke nach Anspruch 12 oder 13, wobei die Steuereinrichtung (28, 34. 40) das Maß der Nutzung durch die anderen Vorrichtungen (30, 32) auf die Ressourcen begrenzt.

15. Netzwerke nach Anspruch 12, 13 oder 14, wobei die Steuereinrichtung (28, 34, 40) den Betreiber der Vorrichtung (18) auffordert, Ressourcen verfügbar zu machen, um Nutzung der Ressourcen durch die anderen Vorrichtungen (30, 32) zu autorisieren, wenn eine Anforderung zur Nutzung der Ressourcen von ihnen empfangen wird.

16. Verfahren, das es gestattet, ausgewählte Vorrichtungen (A...F; 18, 30. 32) in einem Netzwerk (11) in einer Domäne (13; 15; 17; 19) zu verbinden, die wenigstens drei der Vorrichtungen enthält, wobei jede Vorrichtung (A...F; 18, 30, 32) zu drahtloser Kommunikation mit den anderen Vorrichtungen (A...F; 18, 30, 32) der Domäne fähig ist und wenigstens einige der Vorrichtungen eine oder mehrere Ressourcen zur gemeinsamen Nutzung mit den anderen Vorrichtungen der Domäne haben, wobei das Verfahren Einrichten einer Vorrichtung (C; 18) in der Domäne (13; 15; 17; 19) zum Bereitstellen von Identifizierungsdaten für jede andere Vorrichtung (A, B, C; DE; BCE; 18, 30, 32) einschließt, die Identifizierungsdaten jeder Vorrichtung (A, B, C; DE; BCE; 18, 30, 32) durch jede andere Vorrichtung (A, B, C; DE; BCE; 18, 30, 32) in der Domäne (13; 15; 17; 19) interpretiert werden können, bestimmte Kommunikationsmodl nur zwischen Vorrichtungen (A, B, C; DE; BCE; 18, 30, 32) in der Domäne (13; 15; 17; 19) mit derartigen Identihzieruingsdaten gestattet werden, die eingerichtete Vorrichtung (C; 18) selektiv gemeinsame Nutzung der Ressourcen zwischen den Vorrichtungen in der Domäne (19) freigibt, indem sie einen Speicher führt, der die zur gemeinsamen Nutzung zwischen jeweiligen Vorrichtungen in der Domäne (19) verfügbaren Ressourcen anzeigt, und diesen Vorrichtungen Daten zum Freigeben selektiver gemeinsamer Nutzung von Ressourcen bereitstellt.

17. Verfahren nach Anspruch 16, wobei die Identifizierungsdaten einen Schlüssel (KPSD) enthalten.

18. Verfahren nach Anspruch 17, wobei der Schlüssel (KPSD) ein gemeinsam genutzter Schlüssel ist.

19. Verfahren nach Anspruch 17, wobei der Schlüssel (KPSD) ein öffentlicher Schlüssel eines Paars aus öffentlichem und privatem Schlüssel ist und der private Schlüssel in der eingerichteten Vorrichtung gespeichert ist.

20. Verfahren nach einem der Ansprüche 18 -19, wobei jede Vorrichtung (A. B, C; DE; BCE: 18, 30, 32) ein mit ihr verbundenes Slcherheitszertifikat hat, das ihre Mitgliedschaft in der Domäne (13; 15; 17; 19) anzeigt.

21. Verfahren nach einem der Ansprüche 17-20, das Bereitstellen weiterer Schlüssel (KAB, KBC. KCA. KBE, KGE) zum Gestatten verschlüsselter Kommunikation zwischen den Vorrichtungen (A, B, C; DE; BCE; 18, 30, 32) der Domäne (13; 15; 17: 19) einschließt.

22. Verfahren nach einem der Ansprüche 16-21, wobei die eingerichtete Vorrichtung (A, B, C; DE; BCE; 18, 30, 32) zu jeder Vorrichtung (A, B, C; DE; BCE; 18, 30, 32) in der Domäne (13; 15: 17; 19) Daten sendet, die die Eigenschaften der anderen Vorrichtungen (A, B, C; DE; BCE; 18, 30, 32) in der Domäne (13; 15; 17; 19) anzeigen.

23. Verfahren nach einem der Ansprüche 16-22, das Ändern der Vorrichtung in der Domäne, die jeder anderen Vorrichtung Identifizierungsdaten bereitstellt, einschließt.

24. Verfahren nach einem der Ansprüche 16-23, das Zulassen der Bildung einer Vielzahl der Domänen (13; 15; 17: 19) einschließt.

25. Verfahren nach Anspruch 24, wobei eine Vorrichtung (B, C, E) mit jeder der Vielzahl von Domänen (13; 15; 17; 19) verbunden ist.

26. Verfahren nach einem der Ansprüche 16-25, wobei die Nutzung der Ressourcen (22, 24) wenigstens einer der Vorrichtung (18) in der Domäne (19) durch andere Vorrichtungen (30, 32) in der Domäne (18) gesteuert wird.

27. Verfahren nach Anspruch 26, wobei der Steuerschritt Zugriff durch die anderen Vorrichtungen (30, 32) auf lediglich ausgewählte der Ressourcen begrenzt.

28. Verfahren nach Anspruch 26 oder 27, wobei der Steuerschritt das Maß der Nutzung der Ressourcen durch die anderen Vorrichtungen (30, 32) begrenzt.

29. Verfahren nach Anspruch 26, 27 oder 28, wobei der Steuerschritt den Betreiber der Vorrichtung (18) auffordert. Ressourcen verfügbar zu machen, um Nutzung der Ressourcen durch die anderen Vorrichtungen (30, 32) zu autorisieren, wenn eine Anforderung zur Nutzung der Ressourcen von ihnen empfangen wird.

## Revendications

1. Réseau (11) comprenant une pluralité de dispositifs (A ... F ; 18, 30, 32), chaque dispositif étant capable d'une communication sans fil avec les autres dispositifs du réseau, au moins certains desdits dispositifs ayant une ou plusieurs ressources pour partager avec les autres dispositifs du réseau, le réseau comprenant un moyen d'administration pour permettre à des dispositifs sélectionnés (A, B, C ; DE ; BCE ; 18, 30, 32) d'être associés dans un domaine (13 ; 15 ; 17 ; 19) comprenant au moins trois desdits dispositifs en fournissant à chaque dispositif (A, B, C ; DE ; BCE ; 18, 30, 32) des données d'identification, les données d'identification de chaque dispositif (A, B, C ; DE ; BCE ; 18, 30, 32) étant interprétables par chaque autre dispositif (A, B, C ; DE ; BCE ; 18, 30, 32) à l'intérieur du domaine (13 ; 15 ; 17 ; 19), des modes particuliers de communication étant permis seulement entre des dispositifs (A, B, C ; DE ; BCE ; 18, 30, 32) à l'intérieur du domaine (13 ; 15 ; 17 ; 19) ayant de telles données d'identification, le moyen d'administration comprenant des moyens pour valider sélectivement le partage desdites ressources entre les dispositifs à l'intérieur du domaine (19) et lesquels sont utilisables pour maintenir une mémoire indiquant les ressources disponibles pour le partage entre des dispositifs respectifs à l'intérieur du domaine (18) et pour fournir à ces dispositifs des données pour valider le partage sélectif de ressources.

2. Réseau selon la revendication 1, dans lequel les données d'identification reçues à partir du moyen d'administration comprennent une clé (KPSD).

3. Réseau selon la revendication 2, dans lequel la clé (KPSD) est une clé partagée.

4. Réseau selon la revendication 2, dans lequel la clé (KPSD) est une clé publique d'une paire de clés publique-privée, la clé privée étant mémorisée dans le moyen d'administration.

5. Réseau selon l'une quelconque des revendications 1 à 4, dans lequel chaque dispositif (A, B, C ; DE ; BCE ; 18, 30, 32) a un certificat de sécurité associé à celui-ci indiquant son adhésion au domaine (13 ; 15 ; 17 ; 19).

6. Réseau selon l'une quelconque des revendications 2 à 5, comprenant en outre d'autres clés (KAB, KBC, KCA, KBE, KCE) pour permettre une communication chiffrée entre les dispositifs (A, B, C ; DE ; BCE ; 18, 30, 32) à l'intérieur du domaine (13 , 15 ; 17 ; 19).

7. Réseau selon l'une quelconque des revendications 1 à 6, dans lequel le moyen d'administration transmet à chaque dispositif (A, B, C ; DE ; BCE ; 18, 30, 32) à l'intérieur du domaine (13 ; 15 ; 17 ; 19) des données indicatives des caractéristiques des autres dispositifs (A, B, C ; DE ; BCE ; 18, 30, 32) à l'intérieur du domaine (13 ; 15 ; 17 ; 19).

8. Réseau selon l'une quelconque des revendications 1 à 7, dans lequel le moyen d'administration est transférable d'un dispositif à un autre.

9. Réseau selon l'une quelconque des revendications 1 à 7, dans lequel une pluralité de dispositifs à l'intérieur du domaine (13 ; 15 ; 17 ; 19) comprennent des moyens d'administration et des moyens sont prédisposés pour valider sélectivement seulement l'un desdits moyens d'administration à la fois.

10. Réseau selon l'une quelconque des revendications 1 à 9, comprenant, une pluralité de domaines (13 ; 15 ; 17 ; 19).

11. Réseau selon la revendication 10, dans lequel un dispositif (B, C, E) est associé à chacun de ladite pluralité de domaines (13 ; 15 ; 17 ; 19).

12. Réseau selon l'une quelconque des revendications précédentes, dans lequel au moins un des dispositifs (18) à l'intérieur du domaine (19) comprend des moyens de commande (28, 34, 40) pour commander l'utilisation de ses ressources par d'autres dispositifs (30, 32) à l'intérieur du domaine (19).

13. Réseau selon la revendication 12, dans lequel les moyens de commande (28, 34, 40) limitent l'accès par lesdits autres dispositifs (30, 32) seulement à certaines sélectionnées desdites ressources.

14. Réseau selon la revendication 12 ou 13, dans lequel les moyens de commande (28, 34, 40) limitent la quantité d'utilisation par lesdits autres dispositifs (30, 32) auxdites ressources.

15. Réseau selon la revendication 12, 13 ou 14, dans lequel les moyens de commande (28, 34, 40) invitent l'opérateur du dispositif (18) à rendre des ressources disponibles pour autoriser l'utilisation desdites ressources par lesdits autres dispositifs (30, 32) quand une demande pour l'utilisation desdites ressources est reçue de ceux-ci.

16. Système permettant à des dispositifs (A ... F ; 18, 30, 32) sélectionnés à l'intérieur d'un réseau (11) d'être associés dans un domaine (13 ; 15 ; 17 ; 19) qui comprend au moins trois desdits dispositifs, chaque dispositif (A ... F ; 18, 30, 32) étant capable d'une communication sans fil avec les autres dispositifs (A ... F ; 18, 30, 32) du domaine et au moins certains desdits dispositifs ayant une ou plusieurs ressources pour partager avec les autres dispositifs du domaine, le procédé consistant à adapter un dispositif (C ; 18) à l'intérieur du domaine (13 ; 15 ; 17 ; 19) à fournir à chaque autre dispositif (A, B, C ; DE ; BCE ; 18, 30, 32) des données d'identification, les données d'identification de chaque dispositif (A, B, C ; DE ; BCE ; 18, 30, 32) étant interprétables par chaque autre dispositif (A, B, C ; DE ; BCE ; 18, 30, 32) à l'intérieur du domaine (13 ; 15 ; 17 ; 19), des modes particuliers de communication étant permis seulement entre des dispositifs (A, B, C ; DE ; BCE ; 18, 30, 32) à l'intérieur du domaine (13 ; 15 ; 17 ; 19) ayant de telles données d'identification, le dispositif adapté (C ; 18) validant sélectivement le partage desdites ressources entre les dispositifs à l'intérieur du domaine (19) en maintenant une mémoire indiquant les ressources disponibles pour le partage entre des dispositifs respectifs à l'intérieur du domaine (19) et fournissant à ces dispositifs des données pour valider le partage sélectif de ressources.

17. Procédé selon la revendication 16, dans lequel les données d'identification comprennent une clé (KPSD)

18. Procédé selon la revendication 17, dans lequel la clé (KPSD) est une clé partagée.

19. Procédé selon la revendication 17, dans lequel la clé (KPSD) est une clé publique d'une paire de clés publique-privée, la clé privée étant mémorisée dans le dispositif adapté.

20. Procédé selon l'une quelconque des revendications 16 à 19, dans lequel chaque dispositif (A, B, C ; DE ; BCE ; 18, 30, 32) a un certificat de sécurité associé à celui-ci indiquant son adhésion au domaine (13 ; 15 ; 17 ; 19).

21. Procédé selon l'une quelconque des revendications 17 à 20, consistant à fournir en outre d'autres clés (KAB, KBC, KCA, KBE, KCE) pour permettre une communication chiffrée entre les dispositifs (A, B, C ; DE ; BCE ; 18, 30, 32) à l'intérieur du domaine (13 ; 15 ; 17 ; 19).

22. Procédé selon l'une quelconque des revendications 16 à 21, dans lequel le dispositif adapté (A, B, C ; DE ; BCE ; 18, 30, 32) transmet à chaque dispositif (A, B, C ; DE ; BCE ; 18, 30, 32) à l'intérieur du domaine (13 ; 15 ; 17 ; 19) des données indicatives des caractéristiques des autres dispositifs (A, B, C ; DE ; BCE ; 18, 30, 32) à l'intérieur du domaine (13 ; 15 ; 17 ; 19).

23. Procédé selon l'une quelconque des revendications 16 à 22, consistant à changer le dispositif à l'intérieur du domaine qui fournit chaque autre dispositif des données d'identification.

24. Procédé selon l'une quelconque des revendications 16 à 23, consistant à permettre la formation d'une pluralité de domaines (13 ; 15 ; 17 ; 19).

25. Procédé selon la revendication 24, dans lequel un dispositif (B, C, E) est associé à chacun de ladite pluralité de domaines (13 ; 15 ; 17 ; 19).

26. Procédé selon l'une quelconque des revendications 16 à 25, dans lequel l'utilisation des ressources (22, 24) d'au moins un des dispositifs (18) à l'intérieur du domaine (19) par d'autres dispositifs (30, 32) dans le domaine (18) est commandée.

27. procédé selon la revendications 26, dans lequel l'étape de commande limite l'accès par lesdits autres dispositifs (30, 32) seulement à certaines sélectionnées desdites ressources.

28. Procédé selon la revendications 26 ou 27, dans lequel l'étape de commande limite la quantité d'utilisation par lesdits autres dispositifs (30, 32) auxdites ressources.

29. Procédé selon la revendications 26, 27 ou 28, dans lequel l'étape de commande invite l'opérateur du dispositif (18) à rendre des ressources disponibles pour autoriser l'utilisation desdites ressources par lesdits autres dispositifs (30, 32) quand une demande pour l'utilisation desdites ressources est reçue de ceux-ci.
